# FASCICULE DE BREVET EUROPEEN

(11) **EP 2 841 393 B1**
(45) Date de publication et mention de la délivrance du brevet: **08.01.2020**
(21) Numéro de dépôt: 13720488.9
(22) Date de dépôt: 15.04.2013
(51) Int. Cl.: C04B 35/575

(54) **PRODUIT EN CARBURE DE SILICIUM DENSE**
PRODUKT AUS DICHTEM SILICIUMCARBID
PRODUCT MADE OF DENSE SILICON CARBIDE

(30) Priorité: 27.04.2012 FR 1253916
(43) Date de publication de la demande: 04.03.2015
(73) Titulaire: Saint-Gobain Centre de Recherches et d'Etudes Europeen, 92400 Courbevoie (FR); Centre National de la Recherche Scientifique, 75016 Paris (FR)
(72) Inventeur: ROSSIQUET, Gilles, F-16100 Louzac Saint-Andre (FR); JORGE, Eric, F-84210 Les Valayans (FR)
(74) Mandataire: Saint-Gobain Recherche
(86) Numéro de dépôt international: PCT/FR2013/050814
(87) Numéro de publication internationale: WO 2013/160581

(56) Documents cités:
- FALK L K L: "Microstructural Development during Liquid Phase Sintering of Silicon Carbide Ceramics", JOURNAL OF THE EUROPEAN CERAMIC SOCIETY, ELSEVIER SCIENCE PUBLISHERS, BARKING, ESSEX, GB, vol. 17, no. 8, 1 juin 1997 (1997-06-01), pages 983-994, XP004063926, ISSN: 0955-2219, DOI: 10.1016/S0955-2219(96)00198-7
- LENA K.L. FALK: "Electron spectroscopic imaging and fine probe EDX analysis of liquid phase sintered ceramics", JOURNAL OF THE EUROPEAN CERAMIC SOCIETY, vol. 18, no. 15, 1 décembre 1998 (1998-12-01), pages 2263-2279, XP055048005, ISSN: 0955-2219, DOI: 10.1016/S0955-2219(98)00022-3
- GOMEZ E ET AL: "Liquid phase sintering of SiC with additions of Y2O3, Al2O3 and SiO2", JOURNAL OF THE EUROPEAN CERAMIC SOCIETY, ELSEVIER SCIENCE PUBLISHERS, BARKING, ESSEX, GB, vol. 24, no. 9, 1 août 2004 (2004-08-01), pages 2895-2903, XP027107183, ISSN: 0955-2219 [extrait le 2004-03-09]
- SCITI D ET AL: "EFFECTS OF ADDITIVES ON DENSIFICATION, MICROSTRUCTURE AND PROPERTIES OF LIQUID-PHASE SINTERED SILICON CARBIDE", JOURNAL OF MATERIALS SCIENCE, SPRINGER NETHERLANDS, NL, vol. 35, no. 15, 1 août 2000 (2000-08-01), pages 3849-3855, XP001065318, ISSN: 0022-2461, DOI: 10.1023/A:1004881430804
- GERT ROEBBEN ET AL: "High-Temperature Stiffness and Damping Measurements to Monitor the Glassy Intergranular Phase in Liquid-Phase-Sintered Silicon Carbides", JOURNAL OF THE AMERICAN CERAMIC SOCIETY, vol. 88, no. 8, 1 août 2005 (2005-08-01), pages 2152-2158, XP055048011, ISSN: 0002-7820, DOI: 10.1111/j.1551-2916.2005.00373.x
- HERRMANN M ET AL: "Micro-segregations in liquid phase sintered silicon carbide ceramics", JOURNAL OF THE EUROPEAN CERAMIC SOCIETY, ELSEVIER SCIENCE PUBLISHERS, BARKING, ESSEX, GB, vol. 30, no. 6, 1 avril 2010 (2010-04-01), pages 1495-1501, XP026892980, ISSN: 0955-2219, DOI: 10.1016/J.JEURCERAMSOC.2009.12.019 [extrait le 2010-01-15]

## Description

L'invention se rapporte à un produit dense à base de carbure de silicium pouvant notamment être utilisé pour ses propriétés de résistance à l'abrasion, notamment de résistance à l'abrasion par impact (aussi appelé dans le domaine usure à l'impact), à des installations comprenant le produit et à un procédé de fabrication du produit.

Lorsqu'on considère l'usure d'un produit soumis à l'abrasion, on distingue dans le domaine l'usure par frottement et l'usure à l'impact.

L'usure par frottement souvent appelé selon le terme anglais « sliding wear », consiste en une usure générée par le frottement tangentiel de particules abrasives confinées dans un environnement. Elle est habituellement mise en évidence par un essai selon la norme ASTM G76-04 avec un angle d'incidence tangentiel à la surface de l'échantillon à tester.

L'usure à l'impact, ou « impact erosive wear » ou encore « erosion by solid particles impingement » en anglais, consiste en une usure générée par des particules abrasives libres. Elle est habituellement mise en évidence par un essai selon la norme ASTM G76-04 avec un angle d'incidence des particules abrasives cette fois proche de 90°.

Ces sollicitations font donc référence et font appel à des propriétés très différentes du produit.

En particulier, les produits utilisés pour leur bonne résistance à l'usure par frottement ne sont pas forcément également performants dans une utilisation nécessitant une résistance à l'usure à l'impact. Ils ne sont donc, à priori, pas directement utilisables pour réduire l'usure par impact, et inversement.
Il est connu que les produits de carbure de silicium présentent une bonne résistance à l'usure à l'impact. Cependant, pour des raisons économiques, les conditions d'utilisation sollicitent de manière de plus en plus importante lesdits produits, notamment dans les équipements dans lesquels les matériaux utilisés subissent une forte abrasion par des matériaux divisés et durs tels que des roches, des graviers, des grains, en milieu liquide ou non. Il existe donc un besoin pour un produit de carbure de silicium présentant une résistance à l'usure à l'impact encore améliorée.

Un but de l'invention est de satisfaire un tel besoin.

La publication "Microstructural design of sliding-wear-resistant liquid-phase-sintered SiC : An overview, Borrero-Lopez et Al, Journal of the European Ceramic Society 27 (2007), p 3351-3357" décrit l'utilisation d'un oxyde mixte d'Yttrium et d'aluminium pour densifier, par une réaction de frittage à l'état liquide, des particules de carbure de silicium. Selon l'enseignement de cette publication, en particulier les clichés de la microstructure reportés en figure 1, une phase cristallisée de l'oxyde est présente entre les grains de SiC dans le produit final. Il est indiqué qu'un tel produit présente des propriétés de résistance à l'abrasion par frottement. Aucune indication n'est fournie dans cette publication sur les propriétés de résistance à l'impact de tels matériaux.

La publication de la revue « Ceramics International, 19, pages 347-351 (1993) » décrit un procédé de densification de produit en SiC par la technique HIP (High Isostatic Pressure), en présence de quantités de phases liquides oxydes pouvant aller jusqu'à 5% en poids.
D'après les données reportées sur la figure 1 de cette publication, et en recalculant la valeur théorique de la masse volumique absolue de chaque matériau (en tenant compte de sa composition), on peut calculer les masses volumiques relatives suivantes :

| % Al₂O₃ | Masse volumique (g/cm³) (selon publication) | Masse volumique relative (%) (calculée) |
|---|---|---|
| 1 | 3,09 | 96,0% |
| 2 | 3,11 | 96,5% |
| 3 | 3,12 | 96,6% |
| 5 | 3,13 | 96,5% |

Les conditions du procédé HIP décrites dans cette publication apparaissent très sévères tant en pression qu'en température : 200 MPa - 1850°C (voir p.348, milieu de 1^{ere} colonne). On voit cependant que la densité relative de l'échantillon obtenue par un tel procédé reste toujours inférieure à 97%, quel que soit le pourcentage de phase oxyde introduit.

La publication «Micro-segregations in liquid phase sintered silicon carbide ceramics », Hermann et al., Journal of the European Ceramic Society, 30 (2010), 1495-1501, décrit un procédé d'obtention d'un produit dense de SiC à partir d'une barbotine comprenant un solvant non aqueux (isopropanol). Cette publication décrit un produit dense présentant des phases cristallisées de YAG et d'alumine.

Selon un premier aspect, la présente invention se rapporte à un produit fritté présentant une masse volumique relative supérieure à 97% et constituée par :
- plus de 92% poids de carbure de silicium,
- entre 0,5 et 8% poids d'une phase secondaire amorphe comprenant les éléments O, Si et un ou deux éléments choisis parmi Al et Y,
- moins de 2%, au total, d'autres éléments, présents dans ledit produit sous forme d'une phase supplémentaire ou d'impuretés inévitables,
dans lequel le carbure de silicium est présent sous forme de grains cristallisés présentant avantageusement une taille moyenne inférieure à 3 micromètres et dans lequel ladite phase secondaire est amorphe et localisée essentiellement aux joints des grains de carbure de silicium.

Par masse volumique relative d'un produit, on entend le rapport égal à la masse volumique apparente divisée par la masse volumique absolue, exprimé en pourcentage.

Par masse volumique apparente d'un produit, on entend au sens de la présente invention, le rapport égal à la masse du produit divisée par le volume qu'occupe ledit produit.

Par masse volumique absolue d'un produit, on entend au sens de la présente invention, le rapport égal à la masse de matière sèche dudit produit après un broyage à une finesse telle qu'il ne demeure sensiblement aucune porosité fermée, divisée par le volume de cette masse après broyage. Elle peut être mesurée par pycnométrie à hélium.

Par amorphe, on entend au sens de la présente invention qu'aucun pic de cristallisation caractéristique de la phase présente au joint de grains n'apparaît sur un diffractogramme de rayons X opéré sur une poudre dudit produit, même après un temps d'acquisition de plusieurs heures. En complément, le caractère amorphe de la phase secondaire peut également, notamment pour les plus faibles concentrations en ladite phase secondaire (typiquement inférieures à 1% poids), être mis en évidence par une observation au microscope électronique en transmission (MET) par la méthode suivante : au moins 10 échantillons du produit à caractériser sont prélevés de manière aléatoire et préparés pour une observation au microscope électronique en transmission par la technique dite pétrographique. Une modification de l'orientation (ou « tilt ») de l'échantillon permet de mettre en évidence le caractère amorphe de ladite deuxième phase, si elle ne change pas de contraste (pas de contraste de diffraction) lors des changements d'orientation par rapport au faisceau électronique incident. Au contraire, une phase cristallisée change de contraste (contraste de diffraction) lors du tilt, par exemple en passant du gris clair au noir.

Par taille moyenne des grains en carbure de silicium dans la pièce frittée, on entend la moyenne des dimensions mesurées selon la méthode de « Intercept Length » décrite dans la norme ASTM E1382-97, ou « average intercept length », les résultats obtenus par cette norme étant multipliés par un coefficient correcteur égal à 1,56 pour tenir compte de l'aspect tridimensionnel.
La quantité de phase secondaire amorphe est déterminée par analyse chimique, couplée à des observations en microsonde.

De préférence, le produit fritté selon l'invention comporte au moins une des caractéristiques optionnelles suivantes, qui peuvent bien entendu le cas échéant être combinées entres elles :
- La masse volumique relative du produit est supérieure à 97,5%, de préférence supérieure à 98%, de préférence supérieure à 98,5%, de préférence supérieure à 99%, voire supérieure à 99,5%, voire supérieure à 99,7%.
- Le carbure de silicium représente plus de 93%, de préférence plus de 94% de la masse du produit selon l'invention.
- Le carbure de silicium représente moins de 98%, de préférence moins de 96% de la masse du produit selon l'invention.
- La quantité de phase secondaire amorphe est supérieure à 1%, de préférence supérieure à 2%, de préférence supérieure à 3% ou à 4% et/ou inférieure à 7%, de préférence inférieure à 6% de la masse du produit selon l'invention.
- Dans un mode de réalisation la phase secondaire amorphe comporte Al et Si et O, en particulier sous la forme d'un oxyde amorphe d'aluminium et de silicium. Dans une telle configuration, un frittage par SPS, tel que décrit dans la suite de cette description, est avantageusement utilisé.
- Dans un autre mode de réalisation la phase secondaire amorphe comporte Y et Si et O, en particulier sous la forme d'un oxyde amorphe d'Yttrium et de silicium. Dans une telle configuration, un frittage par SPS, tel que décrit dans la suite de cette description, est avantageusement utilisé.
- Dans un autre mode de réalisation, la phase secondaire amorphe comporte Y, Si, Al et O, en particulier essentiellement sous la forme d'un oxyde amorphe d'yttrium, d'aluminium et de silicium. Par essentiellement, on entend selon la présente invention que la phase secondaire est composée pour plus de 80% de sa masse, de préférence pour plus de 90% de sa masse, de préférence pour plus de 95% de sa masse, de préférence pour plus de 98% de sa masse, voire pour plus de 99% de sa masse des seuls éléments Al, Y, Si et O ;
Selon ce mode, dans la phase secondaire amorphe et sur la base des quantités des éléments tels qu'initialement introduits, le rapport atomique Si/(Al+Y) est avantageusement inférieure à 1,6, de préférence inférieure à 1,5.
Selon ce mode, également avantageusement, le rapport molaire Y/Al dans la phase secondaire amorphe, est compris entre 0,4 et 3,5, en particulier entre 0,4 et 2. Très préférentiellement, le rapport molaire Y/Al dans la phase secondaire amorphe est compris entre 0,4 et 0,8, de préférence entre 0,5 et 0,7.
- Dans un mode de réalisation, le produit selon l'invention contient moins de 1,5%, de préférence moins de 1%, de préférence inférieure à 0,5%, voire moins de 0,3%, voire moins de 0,1%, au total, d'autres éléments.
- Dans un mode de réalisation les autres éléments consistent en des impuretés.
- Dans un mode de réalisation, le produit selon l'invention présente moins de deux inclusions de carbone libre sur une surface égale à 4 µm², de préférence moins d'une inclusion de carbone libre, de préférence pas d'inclusion de carbone libre, lesdites inclusions étant localisées entre les grains de carbure de silicium. Dans un mode de réalisation, le carbone libre se présente sous la forme de graphite. Par inclusion d'un élément, on entend un ensemble d'une ou de plusieurs particules dudit élément, ledit ensemble présentant une taille supérieure à 80 nm.
- L'abrasion du produit par impact, telle que mesurée selon la norme selon la norme ASTM G76-04 avec un angle d'incidence de 90° est inférieure à 0,2 mm³/g, de préférence inférieure à 0,1 mm³/g et de manière très préférée inférieure à 0,05 mm³/g.
- La taille moyenne des grains est inférieure à 2 µm, de préférence inférieure à 1 µm, de préférence inférieure à 800 nm, de préférence inférieure à 700 nm, de préférence inférieure à 600 nm et/ou de préférence supérieure à 100 nm, de préférence supérieure à 200 nm, de préférence supérieure à 250 nm.
- La dureté Vickers HV1 du produit, mesurée à 1 Kg, est supérieure à 2200 MPa, de préférence supérieure à 2300 MPa, voire supérieure à 2400 MPa.
- La ténacité du produit est supérieure à 3 Mpa.m^{1/2}, de préférence supérieure à 3,5 Mpa.m^{1/2}, voire supérieure à 4 Mpa.m^{1/2} voire supérieure à 5 Mpa.m^{1/2}.
- Le produit se présente sous la forme d'une pièce dont toutes les dimensions sont supérieures à 5 mm, voire 8 mm, voire 10 et/ou dont le volume est supérieur à 50 cm³, voire 60 cm³.

Le produit selon l'invention peut bien entendu également contenir des impuretés. Par «impuretés», on entend les constituants inévitables, introduits involontairement et nécessairement avec les matières premières ou résultants de réactions avec ces constituants. Les impuretés ne sont pas des constituants nécessaires, mais seulement tolérés.

L'invention se rapporte également à un procédé de fabrication d'un produit fritté selon l'une des revendications précédentes, comprenant les étapes successives suivantes :
a) préparation d'une barbotine comportant,
   - un solvant comportant plus de 50% en masse d'eau,
   - un agent tensio-actif,
   - optionnellement un acide et/ou une base,
   - plus de 4%, en pourcentage massique sur la base de la barbotine, d'un mélange de poudres comportant une poudre de carbure de silicium et une poudre d'un oxyde d'au moins un élément choisi parmi Al et Y, mélangée à une poudre de silice ou de précurseur de silice dont la taille médiane est inférieure à celle de la poudre de carbure de silicium, la taille médiane des particules de la poudre de carbure de silicium étant inférieure à 2 *µ*m, et la taille médiane des particules de la poudre d'oxyde étant inférieure à celle de la poudre de carbure de silicium, la poudre d'oxyde pouvant être remplacée par une poudre de précurseur dudit oxyde,
b) optionnellement, coulage de la barbotine dans un moule,
c) congélation de la barbotine de manière à former une préforme comportant des cristaux de glace séparés par des parois, lesdites parois comportant ledit mélange de poudres de carbure de silicium et dudit oxyde ou précurseur dudit oxyde,
d) optionnellement, démoulage de ladite préforme de barbotine congelée,
e) élimination des cristaux de glace de ladite préforme de barbotine congelée, éventuellement démoulée, de préférence par sublimation, de manière à obtenir un ensemble d'agglomérats,
f) optionnellement broyage (émottage) et/ou tamisage de l'ensemble d'agglomérats de manière à obtenir une poudre,
g) frittage de la poudre par SPS (« Spark Plasma Sintering » en anglais), la mise en forme du produit s'effectuant lors de cette étape, de manière à obtenir un produit selon l'invention.

Les conditions sont définies dans la revendication 14.

Par exemple, un procédé selon l'invention comporte au moins une des caractéristiques suivantes, qui peuvent bien entendu être combinées entres elles:
- la poudre d'un oxyde d'au moins un élément choisi parmi Al et Y est une poudre de YAG (Y₃Al₅O₁₂),
De préférence, l'étape a) comprend au moins une des caractéristiques suivantes, qui peuvent bien entendu être combinées entres elles :
- la poudre de carbure de silicium présente une taille médiane de particules inférieure à 1,5 *µ*m, de préférence inférieure à 1 *µ*m, de préférence inférieure à 0,8 *µ*m, de préférence inférieure à 0,6 *µ*m et/ou supérieure à 50 nm, de préférence supérieure à 100 nm, voire supérieure à 200 nm,
- la poudre de carbure de silicium présente une teneur massique en carbure de silicium supérieure à 95%, de préférence supérieure à 98%, de préférence supérieure à 99%,
- la poudre de carbure de silicium présente une teneur en élément oxygène (O) supérieure à 0,1%, de préférence supérieure à 0,3%, de préférence supérieure à 1% et la poudre de carbure de silicium présente une teneur en élément oxygène inférieure à 6%, de préférence inférieure à 5%, de préférence inférieure à 4%, de préférence inférieure à 3%, voire inférieure à 2%,
- les poudres de YAG, de précurseur de YAG, de silice ou de précurseur de silice présentent une taille médiane de particules inférieure à 1,2 fois la taille médiane des particules de la poudre de carbure de silicium, de préférence inférieure à 1,4 fois, voire inférieure à 1,6 fois, ou même de façon très préférée inférieure à 1,8 fois la taille médiane des particules de la poudre de carbure de silicium,
- la poudre de YAG ou de précurseur de YAG contient moins de 2% en masse d'impuretés, de préférence moins de 1%, de préférence moins de 0,5%, voire moins de 0,2% d'impuretés,
- une poudre de YAG est utilisée, et la barbotine ne contient pas de précurseur de YAG. Avantageusement, l'homogénéité de la dispersion des éléments Y et Al dans la seconde phase amorphe en est améliorée,
- la barbotine ne contient pas de poudre de silice,
- la barbotine contient plus de 5% en masse de mélange de poudres, de préférence plus de 10%, de préférence plus de 20%, de préférence plus de 30%, de préférence plus de 40% en masse de mélange de poudres,
- la barbotine contient moins de 80% en masse de mélange de poudres, de façon encore plus préférée moins de 70%, voire moins de 60%, en masse de mélange de poudres,
- l'agent tensio-actif est choisi parmi les tensio-actifs anioniques et leurs mélanges, les tensio-actifs cationiques et leurs mélanges, les tensio-actifs non ioniques et leurs mélanges, les tensio-actifs amphotères et leurs mélanges, et leurs mélanges. De préférence, l'agent tensio-actif est choisi parmi les acides polyacryliques, les acides polyméthacryliques, les polyethylenimines, l'hydroxyde d'ammonium tétraméthyle, l'acide citique, l'acide stéarique, les polycarboxylates modifiés et leurs mélanges, de préférence l'agent tensio-actif est choisi parmi les polycarboxylates modifiés,
- l'agent tensio-actif est un éther polycarboxylate modifié et la quantité d'éther polycarboxylate modifié est supérieure à 0,01%, de préférence supérieure à 0,025% et inférieure à 1%, de préférence inférieure à 0,5%, inférieure à 0,1%, inférieure à 0,05%, inférieure à 0,035%, en pourcentage en masse sur la base de la masse de la poudre de carbure de silicium,
- la barbotine ne contient pas d'autres éléments que le solvant, le tensio-actif, un acide et/ou une base et le mélange de poudres. Dans un mode de réalisation préféré, la barbotine ne contient pas de liant,
- le mélange de poudres la barbotine consiste en une poudre de carbure de silicium présentant une teneur en élément oxygène comprise entre 1% et 2% et une poudre de YAG.

De préférence, au cours de l'étape b), la barbotine est coulée dans des plateaux, sous la forme de plaques, de préférence d'épaisseur inférieure à 10 cm, voire inférieure à 5 cm.

De préférence, l'étape c) présente au moins une des caractéristiques suivantes qui peuvent être combinées le cas échéant entre elles :
- la vitesse du front de solidification est supérieure à 1 µm/s, de préférence supérieure à 5 µm/s, voire supérieure à 10 µm/s, voire supérieure à 20 µm/s, voire supérieure à 40 µm/s,
- la vitesse du front de solidification est inférieure à 400 µm/s, de préférence inférieure à 300 µm/s, de préférence inférieure à 200 µm/s, de préférence inférieure à 100 µm/s,
- le gradient thermique est supérieur à 10°C/cm, voire supérieur à 20°C/cm,
- le gradient thermique est inférieur à 200°C/cm, voire inférieur à 150°C/cm, voire inférieur à 100°C/cm.
De préférence, à l'étape e), l'élimination des cristaux de glace résulte d'une sublimation de ceux-ci.

De préférence, la poudre obtenue en fin d'étape f) présente les caractéristiques suivantes:
- une taille médiane d'agglomérats supérieure à 3 µm, de préférence supérieure à 10 µm,
- une taille médiane d'agglomérats inférieure à 200 µm, de préférence inférieure à 150 µm, de préférence inférieure à 100 µm, de préférence inférieure à 50 µm,
- une humidité résiduelle comprise entre 0,2 et 1%, de préférence comprise entre 0,2% et 0,6%, en pourcentages en masse sur la base de la poudre humide.

L'étape g) est mise en œuvre par une technique de frittage SPS dont les principales caractéristiques sont données ci-après :
Le chauffage est obtenu grâce à un courant continu qui traverse une matrice conductrice dans laquelle l'échantillon est placé et soumis à une pression uniaxiale de plusieurs dizaines de MPa. Ce dispositif permet d'atteindre des températures de l'ordre de 2500°C.

Dans l'installation SPS, des séries de trains de pulses de courant continu (pulse classiquement d'une durée de 3 à 4 ms) entrecoupés de temps morts d'intensité et de tension variables sont appliquées de manière à atteindre la température de frittage désirée. La matrice conductrice agit en tant que source de chauffage, en plus de l'éventuelle conductivité de l'échantillon, ce qui permet d'obtenir des vitesses de chauffage élevées (jusqu'à 600°C/min et plus) et assure un bon transfert de la chaleur à l'échantillon. Ainsi des objets frittés de très grande compacité peuvent être obtenus par cette technique pour des températures plus faibles (quelques centaines de degrés moins élevées) et surtout des temps de frittage significativement plus courts (quelques minutes) que pour des méthodes conventionnelles de frittage à l'état solide ou liquide.

L'étape g) présente les caractéristiques suivantes:
- la température de frittage est supérieure à 1700°C, de préférence supérieure à 1750°C, de préférence supérieure à 1800°C,
- la température de frittage est inférieure à 2300°C, voire inférieure à 2200°C, voire inférieure à 2000°C, voire inférieure à 1900°C,
Une température égale à 1850°C est bien adaptée.
- la pression appliquée est supérieure à 10 MPa, de préférence supérieure à 20MPa, de préférence supérieure à 35 MPa,
- la pression appliquée est de préférence inférieure à 500 MPa, de préférence inférieure à 300 MPa, voire inférieure à 200 MPa, voire inférieure à 100 MPa, voire inférieure à 75MPa, voire inférieure à 55 MPa,
- le temps de maintien en palier à haute température est nul ou inférieur à 60 minutes. De préférence ce temps de maintien est supérieur à 0,5 minutes, de préférence supérieur à 1 minute, de préférence supérieur à 2 minutes, de préférence supérieur à 4 minutes, de préférence inférieur 30 minutes, de préférence inférieur à 20 minutes, de préférence inférieure à 10 minutes, de préférence inférieur à 6 minutes. Un temps de frittage égal à 5 minutes est bien adapté,
- la vitesse de montée à la température maximale est supérieure à 20°C/min, voire supérieure à 30°C/min, voire supérieure à 50°C/min, voire supérieure à 100°C/min,
- La cuisson a lieu de préférence sous atmosphère contrôlée, de préférence sous vide ou sous argon ou sous azote.

Sauf indication contraire, dans la présente description, tous les pourcentages sont des pourcentages massiques.

On appelle « sublimation » une opération qui consiste, généralement sous vide, à faire passer un produit directement de l'état solide à l'état gazeux sans passer par la fusion.

La taille d'une particule est donnée classiquement par une caractérisation de distribution granulométrique laser. Un granulomètre laser permet classiquement la mesure des tailles inférieures ou égale à 5 mm. On appelle « taille médiane » d'un ensemble de particules, en particulier d'une poudre, le percentile D₅₀, c'est-à-dire la taille divisant les particules en première et deuxième populations égales en volume, ces première et deuxième populations ne comportant que des particules présentant une taille supérieure, ou inférieure respectivement, à la taille médiane. On appelle « taille maximale » d'un ensemble de particules, en particulier d'une poudre, le percentile D_{99,5}, c'est-à-dire la taille pour laquelle 99,5% en volume des particules présentent une taille inférieure.

Par congélation « orientée », on entend une congélation effectuée progressivement suivant une ou plusieurs directions déterminées.

Par «contenant un», «comprenant un» ou «comportant un», on entend «comportant au moins un», sauf indication contraire.

Un précurseur d'un constituant est un composé capable, lors d'un frittage de conduire à ce constituant. Le remplacement d'un constituant par une quantité «équivalente» d'un précurseur de ce constituant ne modifie pas les quantités dudit constituant dans le produit fritté obtenu.

On donne ci-après une description plus détaillée de modes de réalisation avantageux mais non restrictifs du procédé d'obtention du produit selon l'invention :
A l'étape a) de préparation de la barbotine, on prépare une suspension aqueuse d'un mélange de poudres de particules. La barbotine peut aussi contenir un agent anti-moussant. De préférence la teneur en agent anti-moussant est comprise entre 0,1 et 10% en masse sur la base de la quantité du mélange de poudres de particules. Les agents anti-moussants classiquement utilisés pour la fabrication de produits frittés par coulage en barbotine peuvent être mis en œuvre, par exemple le CONTRASPUM CONC. commercialisé par la société Zschimmer et Schwarz. De préférence, la barbotine ne contient pas d'agent anti-moussant.

Afin de favoriser une bonne dispersion des particules de la poudre dans la barbotine, le potentiel zêta peut être ajusté, par exemple par un ajout d'acide et/ou de base, organiques et/ou inorganiques. De préférence les différents constituants de la barbotine sont ajoutés sous agitation.

Le mélange des différents constituants de la barbotine peut être effectué suivant toute technique connue de l'homme du métier, par exemple en mélangeur, en broyeur à jarre avec des billes ou boulets, de préférence en carbure de silicium. Si un broyeur à jarre est utilisé, le temps de mélange est de préférence supérieur à 2 heures et inférieur à 48 heures. De préférence, un broyeur à jarre est utilisé.

De préférence, le pH est mesuré entre 30 minutes et une heure après l'introduction du dernier constituant et ajusté si nécessaire.

A l'étape b), la barbotine est de préférence coulée dans un moule adapté pour la congélation orientée de l'étape suivante, de préférence la barbotine est coulée sous la forme d'une plaque d'épaisseur inférieure à 10 cm, de préférence inférieure à 5 cm.

A l'étape c), la barbotine est refroidie de manière à congeler l'eau et former des cristaux de glace. La barbotine est progressivement congelée en créant puis en déplaçant, dans la barbotine, une zone de transition thermique rapide entre une région amont dans laquelle l'eau est congelée et une région aval dans laquelle l'eau est liquide. Son passage dans la barbotine conduit à la solidification de l'eau. C'est pourquoi elle est classiquement qualifiée de « front de solidification ».
La création et le déplacement d'un front de solidification, nécessaires à une congélation orientée de la barbotine, sont des techniques couramment utilisées dans le domaine de la « texturation à la glace », ou «ice templating». Cette technologie est un mode de réalisation particulier du procédé général de «congélation/ élimination des cristaux congelés», appelé en anglais «freeze casting». De préférence, on utilise un liquide, en particulier de l'azote liquide, pour créer le front de solidification.

De préférence, la vitesse du front de solidification est supérieure à 1 µm/s, de préférence supérieure à 5 µm/s, de préférence supérieure à 10 µm/s et/ou inférieure à 400 µm/s, de préférence inférieure à 300 µm/s, de préférence inférieure à 200 µm/s, de préférence inférieure à 100 µm/s, voire inférieure à 50 µm/s, voire inférieure à 30 µm/s. Au passage du front de solidification, les nouveaux cristaux de glace s'orientent, puis croissent sensiblement selon la direction de solidification imposée par le gradient thermique.

De préférence, la congélation est orientée.

La taille des cristaux de glace dépend principalement de la vitesse de déplacement du front de solidification et du gradient thermique associé à ce front de solidification. Plus la vitesse de solidification est élevée, plus la taille des cristaux de glace est faible.
La taille des cristaux de glace peut également être modifiée par la composition de la barbotine, et en particulier par la taille des particules du mélange de poudres. De préférence, le procédé ne présente pas d'étape d).

A l'étape e), la préforme de barbotine congelée est placée dans des conditions de pression et de température conduisant à une élimination des cristaux de glace.
De préférence, l'élimination résulte d'une sublimation des cristaux de glace. L'eau passe alors directement de l'état solide à l'état gazeux. Avantageusement, la sublimation des cristaux de glace permet une élimination de l'eau sensiblement sans déplacement des particules disposées entre ces cristaux. Par exemple, on peut sublimer les cristaux de glace en les réchauffant à très basse pression, typiquement inférieure à 0,5 mbar.
On peut également faire fondre les cristaux de glace, et laisser s'écouler l'eau liquide obtenue. La disparition d'un cristal de glace laisse place à un pore délimité par une paroi principalement formée par les particules de carbure de silicium et d'oxyde d'au moins un élément choisi parmi Al et Y, la forme de ce pore correspondant sensiblement à la forme du cristal éliminé. Ainsi, la création de cristaux de glace allongés, sensiblement parallèles les uns aux autres, conduit-elle à la création de pores tubulaires, également parallèles les uns aux autres.

L'étape e) se poursuit de préférence jusqu'à l'élimination de tous les cristaux de glace.
On obtient ainsi un ensemble d'agglomérats.

A l'étape f), le broyage est effectué en voie sèche par toute technique connu de l'homme du métier, de préférence à l'aide d'un bol contenant des mobiles (anneaux, palets ou billes) mis en mouvement ou d'un mortier et d'un pilon. Le tamisage est de préférence effectué à l'aide de tamis d'ouverture inférieure à 500 µm, voire inférieure à 400 µm. Avantageusement, cette étape permet d'éliminer les plus gros agglomérats.

A l'étape g), la poudre est versée dans la matrice SPS qui est au préalablement recouverte en son intérieur de papier carbone. La matrice est par la suite vibrée pour obtenir une bonne répartition de la poudre. La poudre peut-être également pré-compactée avant d'être insérée dans la matrice SPS.

La température de frittage est supérieure à 1700°C, de préférence supérieure à 1750°C, de préférence supérieure à 1800°C et inférieure à 2300°C, voire inférieure à 2200°C, voire inférieure à 2000°C, voire inférieure à 1900°C. Une température égale à 1850°C est bien adaptée.

La pression appliquée est supérieure à 10 MPa, de préférence supérieure à 20MPa, de préférence supérieure à 35 MPa et inférieure à 500 MPa, de préférence inférieure à 300 MPa, voire inférieure à 200 MPa, voire inférieure à 100 MPa, voire inférieure à 75 MPa, voire inférieure à 55 MPa.

Le temps de maintien en palier à haute température peut être nul. De préférence ce temps de maintien est supérieur à 0,5 minutes, de préférence supérieur à 1 minute, de préférence supérieur à 2 minutes, de préférence supérieur à 4 minutes et inférieur à 60 minutes, de préférence inférieur 30 minutes, de préférence inférieur à 20 minutes, de préférence inférieure à 10 minutes, de préférence inférieur à 6 minutes. Un temps de frittage égal à 5 minutes est bien adapté.

La vitesse de montée à la température maximale est supérieure à 20°C/min, voire supérieure à 30°C/min, voire supérieure à 50°C/min, voire supérieure à 100°C/min. La cuisson a lieu de préférence sous atmosphère contrôlée, de préférence sous vide ou sous argon ou sous azote.

L'invention se rapporte également à l'utilisation du produit tel que décrit précédemment en tant que pièce de protection anti-abrasion résistante à l'usure par impact, au sens précédemment décrit.

En particulier, l'invention concerne aussi toute installation comportant ledit produit choisie parmi une trémie, un équipement de transport ou de convoyage de solides granulaires ou pulvérulents, par exemple par voie hydraulique ou pneumatique, notamment un déflecteur, une goulotte, un conduit, un équipement de comminution à sec ou en milieu humide, notamment un broyeur, un équipement de sélection granulométrique, notamment un cyclone, une bille de broyage, une pale de ventilateur, un sélecteur granulométrique dynamique ou statique, notamment un tamis, une buse de pulvérisation ou d'injection, un rotor ou agitateur pour suspensions, un joint d'étanchéité, une pompe, une bague ou un palier d'un arbre tournant, une vanne, un robinet.

Les exemples qui suivent sont donnés à titre purement illustratif et ne limitent sous aucun des aspects décrits la portée de la présente invention.

### Exemple 1 (comparatif):

Le produit de l'exemple comparatif 1 est un produit commercial en carbure de silicium Hexoloy® SA, commercialisé par la société Saint-Gobain Ceramics. Il est fabriqué par frittage en phase solide naturel et est couramment utilisé dans des installations comme produit anti-abrasion et résistant à l'usure par impact.

### Exemple 2 (selon l'invention):

Le produit de l'exemple 2 selon l'invention est obtenu de la manière suivante :
Selon la première étape a), une barbotine est préparée en mélangeant:
- 2212 grammes d'eau,
- 2328 grammes d'une poudre de carbure de silicium de référence commerciale Starck UF25, présentant une surface spécifique de 25 m²/g, une taille médiane de particules égale à 0,43 µm, une teneur en élément oxygène égale à 1,7% en masse, et contenant plus de 99% de carbure de silicium,
- 122,5 grammes d'une poudre de YAG (Y₃Al₅O₁₂), commercialisée par la société Baikowski, présentant une taille médiane de particules égale à 0,18 µm, et une teneur en Y₃Al₅O₁₂ supérieure à 99,5%. La masse de la poudre de YAG représente 5% de la masse totale du mélange (poudre de carbure de silicium et poudre de YAG),
- 0,88 grammes d'un dispersant (Castament FS10 commercialisé par la société BASF), soit 0,038% de la masse de la poudre de carbure de silicium.

Le taux de matière sèche est égal à 50% de la masse de la barbotine. Le pH de la barbotine est ajusté à 11,5 par un ajout de soude 1M. Aucun liant n'est introduit dans la barbotine. Le mélange est effectué dans un broyeur à jarre, pendant 24 heures.

A l'étape b), la barbotine est coulée sous la forme d'une plaque d'épaisseur égale à 4 cm, dans un plateau en inox.

A l'étape c), la plaque est congelée avec une vitesse de front de solidification égale à 8 µm/s.

A l'étape e), les cristaux de glace sont éliminés par sublimation, en plaçant la plaque congelée sous un vide égal à 400 µbar et à une température égale à -20°C. La température est ensuite augmentée jusqu'à 40°C pour sécher les agglomérats formés.

A l'étape g), les agglomérats obtenus en fin d'étape précédente sont broyés dans un broyeur modèle CB220 de la société Sodemi avec un bol mis en vibration comprenant à l'intérieur 2 mobiles (un disque et un anneau) de manière à obtenir une poudre d'agglomérats présentant une taille médiane d'agglomérats comprise entre 3 et 50 µm.

L'humidité résiduelle est égale à 0,6%.

A l'étape g), des échantillons de diamètre égal à 30 mm et d'un masse égale à 10 grammes sont frittés par SPS à 1850°C pendant 5 minutes à une pression de 40 MPa, avec une vitesse de montée à 1850°C égale à 100°C/min.

Ces traitements de frittage par SPS ont été effectués sur un appareil de type HPD 25/2 de la société FCT Systeme GmbH. Un vide de 10⁻² mbar est maintenu à l'intérieur de l'enceinte. Une série de pulses de courant continu (la durée des pulses est égale à 2 ms, le temps entre deux pulses est de 1 ms, et tous les 12 pulses, le système observe une pause égale à 6 ms, l'intensité varie entre 0 et 1720 A et la tension varie entre 0 et 6,7 V) est utilisée. La température est mesurée à l'aide d'un pyromètre disposé selon l'axe de pressage.

### Exemple 3 (comparatif):

Le produit de l'exemple 3 comparatif est un produit de carbure de silicium, contenant une phase secondaire comprenant essentiellement les éléments Y, Al, Si et O, sous une forme cristallisée. Il est fabriqué selon le procédé suivant :
A l'étape a), une barbotine est préparée en mélangeant:
- 2212 grammes d'eau,
- 2205 grammes de la poudre de carbure de silicium décrite dans l'exemple 2,
- 245 grammes de la poudre de YAG décrite précédemment. La masse totale de la poudre d'Y₃Al₅O₁₂ représente 10% de la masse pulvérulente totale (carbure de silicium + Y₃Al₅O₁₂),
- 0,86 grammes du dispersant décrit précédemment, soit 0,039% de la masse de la poudre de carbure de silicium.

Le taux de matière sèche est égal à 50% de la masse de la barbotine. Le pH de la barbotine a été ajusté à 11,5 par un ajout de soude 1M.

Aucun liant n'a été introduit dans la barbotine.

Le mélange a été effectué dans un broyeur à jarre, pendant 24 heures.

Les étapes b) à e) sont opérées de façon identique à l'exemple 2.

Des préformes de dimensions 80 x 80 x 12 mm³ sont obtenues par pressage unidirectionnel à froid, à une pression égale à 60 MPa, puis frittées sous argon, de manière à obtenir des pièces frittées dans le cycle suivant :
- montée à 400°C à une vitesse de 800°C/h,
- Montée de 400°C à 1000°C à une vitesse égale à 400°C/h,
- Montée de 1000°C à 1775°C à une vitesse égale à 230°C/h,
- montée de 1775°C à 1875°C à une vitesse égale à 100°C/h,
- palier de 0,5 heures à 1875°C,
- descente à refroidissement libre.

Les caractéristiques et propriétés des produits obtenus selon les exemples 1 à 3 précédents sont mesurées selon les techniques suivantes :
La masse volumique apparente est mesurée par imbibition, selon le principe de la poussée d'Archimède.
La masse volumique absolue est mesurée par pycnométrie à hélium sur un équipement AccuPyc 1330 de Micromeretics®, sur une poudre de produit broyé présentant une taille maximale inférieure à 160 µm.

Après attaque chimique visant à révéler les joints de grains, la taille moyenne des grains des produits des exemples est mesurée selon la méthode de « Intercept Length » décrite dans la norme ASTM E1382-97, ou « average intercept length », les résultats obtenus par cette norme étant multipliés par un coefficient correcteur égal à 1,56 pour tenir compte de l'aspect tridimensionnel. L'attaque chimique réalisée consiste à plonger les échantillons polis de qualité miroir pendant 15 minutes dans un mélange porté à ébullition de 60 ml d'eau, 17 g d'hexacyanoferrate de potassium et 20 g de potasse.

La mise en évidence d'une seconde phase aux joints de grains a été réalisée par microscopie électronique à balayage, par microscopie électronique en transmission et par microsonde.

La détermination de son caractère non cristallisé est effectuée par diffraction des rayons X, confirmée par des observations par microscopie électronique en transmission (MET) comme indiqué précédemment.

Les analyses par diffraction X ont été réalisées sur un équipement X'Pert PRO MPD de PANalytical sur configuration Kαₘ et détection rapide, sur un domaine angulaire 2θ compris entre 25° et 37°, par pas de 0,002°/s. L'optique avant est constituée d'une fente de divergence fixe à 1°, d'une fente de Soller 0,04 rad, un masque de 10 mm et une fente anti-diffusion fixe de 2°. L'échantillon est en rotation sur lui-même à une vitesse de 1 seconde par tour, afin d'augmenter la statistique de comptage. L'optique arrière est constituée d'une fente anti-diffusion fixe à 1°, d'une fente de Soller 0,04 rad et d'un filtre Ni. Avant analyse par diffraction X, les échantillons sont broyés sous la forme d'une poudre présentant une taille maximale égale à 40 µm.

La dureté a été mesurée à partir d'indentations Vickers (à 1kg). Après mesure de la longueur des fissures radiales, la ténacité a été calculée en utilisant la formule universelle développée par Liang et al. (Evaluation by indentation of fracture toughness of ceramic materials, 1990).

L'abrasion des produits des exemples est mesurée suivant la norme ASTM G76 - 04, sur des échantillons de dimensions 30 x 30 mm² avec une épaisseur égale à 3 mm, à l'aide de particules abrasives d'alumine projetées sur lesdits échantillons à une pression de 24 psi, un débit de 2 g/min et pendant un temps égal à 15 minutes, avec un angle d'incidence, soit l'angle entre l'échantillon et le flux de particules d'alumine égal à 90°. La valeur de l'abrasion, ou « erosion value » est égale au rapport du volume de matière abrasée, c'est-à-dire à la perte de volume après essai, ramené à la masse d'abrasif utilisée. Plus la valeur de ce rapport est faible, meilleure est la résistance à l'abrasion.

Les principales caractéristiques du procédé et des mesures effectuées sur le produit obtenu selon les exemples 1 à 3 sont reportées dans le tableau 1 qui suit :

**Tableau 1**

| | exemple 1 (comparatif) | exemple 3 (comparatif) | exemple 2 (invention) |
|---|---|---|---|
| quantité de poudre d'Y₃Al₅O₁₂ dans la barbotine, en pourcentage en masse sur la base de la matière sèche de la barbotine | 0 | 10 | 5 |
| carbure de silicium (% massique) | >95% | >88% | >93% |
| Masse volumique relative (%) | 98,5 | 98,6 | 98,6 |
| taille moyenne des grains (µm) | 6 | 3 | 0,5 |
| présence d'une phase secondaire | Oui, sous forme d'inclusions | Oui, localisée aux joints de grains | Oui, localisée aux joints de grains |
| Nature de la phase secondaire | Carbone et carbure de bore | Comporte pour plus de 99% les éléments Y, Al, Si et O | Comporte pour plus de 99% les éléments Y, Al, Si et O |
| structure de la phase secondaire | cristallisée | cristallisée | amorphe |
| Dureté Vickers, mesurée à 1 Kg (MPa) | 2430 | 2220 | 2390 |
| Ténacité (MPa.m^{1/2}) | 3 | 5,2 | 3,8 |
| Abrasion mesurée à un angle d'incidence égal à 90° (mm³/g) | 0,29 | 0,33 | 0,02 |

Comme le montre le tableau 1, l'abrasion mesurée à un angle d'incidence égal à 90° est nettement plus faible pour le produit de l'exemple 2 selon l'invention : elle est égale à seulement 0,02 mm³/g, contre 0,29 et 0,33 mm³/g pour les produits des exemples 1 et 3 comparatifs.

Bien entendu, la présente invention n'est pas limitée aux modes de réalisation décrits et représentés, fournis à titre d'exemples. En particulier, des combinaisons des différents modes de réalisation décrits entrent également dans le cadre de l'invention.
L'invention n'est pas limitée non plus par la forme ou les dimensions du produit fritté à base de carbure de silicium.

## Revendications

1. Produit fritté présentant une masse volumique relative supérieure à 97% et constitué par :
- plus de 92% poids de carbure de silicium,
- entre 0,5 et 8% poids d'une phase secondaire amorphe comprenant les éléments O, Si et un ou deux éléments choisis parmi Al et Y,
- moins de 2% d'autres éléments, présents dans ledit produit sous forme d'une phase supplémentaire ou d'impuretés inévitables,
dans lequel le carbure de silicium est présent sous forme de grains cristallisés et dans lequel ladite phase secondaire est amorphe et localisée essentiellement aux joints des grains de carbure de silicium.

2. Produit selon la revendication 1 dans lequel la taille moyenne des grains cristallisés est inférieure à 3 micromètres.

3. Produit selon l'une des revendications 1 ou 2 dans lequel la quantité de phase secondaire amorphe est supérieure à 2% et/ou inférieure à 7% de la masse dudit produit.

4. Produit selon la revendication précédente dans lequel la quantité de phase secondaire amorphe est supérieure à 3% et/ou inférieure à 6% de la masse dudit produit.

5. Produit selon l'une des revendications précédentes dans lequel la phase secondaire amorphe comporte Al et Si et O, en particulier sous la forme d'un oxyde amorphe d'Aluminium et de silicium.

6. Produit selon l'une des revendications 1 à 4 dans lequel la phase secondaire amorphe comporte Y et Si et O, en particulier sous la forme d'un oxyde amorphe d'Yttrium et de silicium.

7. Produit selon l'une des revendications 1 à 4 dans lequel la phase secondaire amorphe comporte Y, Al et Si et O, en particulier sous la forme d'un oxyde amorphe d'aluminium, d'Yttrium et de silicium.

8. Produit selon l'une des revendications précédentes, dans lequel la teneur globale en autres éléments est inférieure à 1%, de préférence inférieure à 0,5%.

9. Produit selon l'une des revendications précédentes, dans lequel la taille moyenne des grains est comprise entre 200 nanomètres et 1 micromètre.

10. Produit selon l'une des revendications précédentes, dans lequel la masse volumique relative est supérieure à 98,5%.

11. Produit selon l'une des revendications précédentes, dans lequel le nombre d'inclusions de carbone libre sur une surface égale à 4 *µ*m² est inférieur à 2, de préférence inférieur à 1, de préférence égal à 0, lesdites inclusions étant localisées entre les grains de carbure de silicium.

12. Utilisation d'un produit tel que décrit dans l'une des revendications précédentes en tant que pièce de protection anti-abrasion résistante à l'usure par impact.

13. Installation comportant un produit selon l'une des revendications 1 à 11 choisie parmi une trémie, un équipement de transport ou de convoyage de solides granulaires ou pulvérulents, un équipement de comminution à sec ou en milieu humide, un équipement de sélection granulométrique, une bille de broyage, une pale de ventilateur, un sélecteur granulométrique dynamique ou statique, une buse de pulvérisation ou d'injection, un rotor ou agitateur pour suspensions, un joint d'étanchéité, une pompe, une bague ou un palier d'un arbre tournant, une vanne, un robinet.

14. Procédé de fabrication d'un produit fritté selon l'une des revendications 1 à 11, comprenant les étapes successives suivantes :
a) préparation d'une barbotine comportant,
- un solvant comportant plus de 50% en masse d'eau,
- un agent tensio-actif,
- optionnellement un acide et/ou une base,
- plus de 4%, en pourcentage massique sur la base de la barbotine, d'un mélange de poudres comportant une poudre de carbure de silicium et une poudre d'un oxyde d'au moins un élément choisi parmi Al et Y, mélangée à une poudre de silice ou de précurseur de silice dont la taille médiane est inférieure à celle de la poudre de carbure de silicium, la taille médiane des particules de la poudre de carbure de silicium étant inférieure à 2 *µ*m, et la taille médiane des particules de la poudre d'oxyde étant inférieure à celle de la poudre de carbure de silicium, ladite poudre d'oxyde pouvant être remplacée par une poudre de précurseurs,
b) optionnellement, coulage de la barbotine dans un moule,
c) congélation de la barbotine de manière à former une préforme comportant des cristaux de glace séparés par des parois, lesdites parois comportant ledit mélange de poudres de carbure de silicium et dudit oxyde ou précurseur dudit oxyde,
d) optionnellement, démoulage de ladite préforme de barbotine congelée,
e) élimination des cristaux de glace de ladite préforme de barbotine congelée, éventuellement démoulée, de préférence par sublimation, de manière à obtenir un ensemble d'agglomérats,
f) optionnellement broyage (émottage) et/ou tamisage de l'ensemble d'agglomérats de manière à obtenir une poudre,
g) frittage de la poudre par SPS (« Spark Plasma Sintering » en anglais), la mise en forme du produit s'effectuant lors de cette étape, de manière à obtenir un produit selon l'invention, dans les conditions suivantes :
- une température de frittage supérieure à 1700°C,
- une pression appliquée supérieure à 10 MPa,
- un temps de maintien de palier à haute température nul ou inférieur à 60 minutes,
- une vitesse de montée à la température maximale supérieure à 20°C/min.

15. Procédé selon la revendication 14, dans lequel la poudre d'un oxyde d'au moins un élément choisi parmi Al et Y est une poudre de YAG (Y₃Al₅O₁₂).

## Patentansprüche

1. Gesintertes Produkt mit einer relativen Dichte von über 97 %, bestehend aus:
- mehr als 92 Gew.-% Siliciumcarbid,
- zwischen 0,5 und 8 Gew.-% einer amorphen Sekundärphase, enthaltend die Elemente O, Si und ein oder zwei Elemente, ausgewählt aus Al und Y,
- weniger als 2 % anderer Elemente, die in dem Produkt in Form einer zusätzlichen Phase oder unvermeidbarer Verunreinigungen vorliegen,
wobei das Siliciumcarbid in Form von kristallisierten Körnern vorliegt und wobei die Sekundärphase amorph ist und sich im Wesentlichen an den Siliciumcarbid-Korngrenzen befindet.

2. Produkt nach Anspruch 1, wobei die mittlere Größe der kristallisierten Körner kleiner als 3 µm ist.

3. Produkt nach einem der Ansprüche 1 oder 2, wobei die Menge an amorpher Sekundärphase größer als 2 % und/oder kleiner als 7 % der Masse des Produkts ist.

4. Produkt nach dem vorhergehenden Anspruch, wobei die Menge an amorpher Sekundärphase größer als 3 % und/oder kleiner als 6 % der Masse des Produkts ist.

5. Produkt nach einem der vorhergehenden Ansprüche, wobei die amorphe Sekundärphase Al und Si und O enthält, insbesondere in Form eines amorphen Oxids von Aluminium und Silicium.

6. Produkt nach einem der Ansprüche 1 bis 4, wobei die amorphe Sekundärphase Y und Si und O enthält, insbesondere in Form eines amorphen Oxids von Yttrium und Silicium.

7. Produkt nach einem der Ansprüche 1 bis 4, wobei die amorphe Sekundärphase Y, Al und Si und O enthält, insbesondere in Form eines amorphen Oxids von Aluminium, Yttrium und Silicium.

8. Produkt nach einem der vorhergehenden Ansprüche, wobei der Gesamtgehalt an anderen Elementen kleiner als 1 %, vorzugsweise kleiner als 0,5 % ist.

9. Produkt nach einem der vorhergehenden Ansprüche, wobei die mittlere Korngröße zwischen 200 nm und 1 µm liegt.

10. Produkt nach einem der vorhergehenden Ansprüche, wobei die relative Dichte größer als 98,5 % ist.

11. Produkt nach einem der vorhergehenden Ansprüche, wobei die Anzahl der Einschlüsse freien Kohlenstoffs auf einer Fläche von 4 µm² kleiner als 2, vorzugsweise kleiner als 1, vorzugsweise gleich 0 ist, wobei sich die Einschlüsse zwischen den Siliciumcarbidkörnern befinden.

12. Verwendung eines Produktes nach einem der vorhergehenden Ansprüche als schlagfestes Verschleißschutzteil.

13. Einrichtung, umfassend ein Produkt nach einem der Ansprüche 1 bis 11, ausgewählt aus einem Trichter, einer Transport- oder Fördereinrichtung für körnige oder pulverförmige Feststoffe, einer Einrichtung zur Trocken- oder Feuchtzerkleinerung, einer Einrichtung zur granulometrischen Trennung, einer Mahlkugel, einer Gebläseschaufel, einer Vorrichtung zum dynamischen oder statischen Klassieren, einer Sprüh- oder Einspritzdüse, einem Rotor oder Rührwerk für Suspensionen, einer Dichtung, einer Pumpe, einem Ring oder einem Lager einer Drehwelle, einem Ventil, einem Hahn.

14. Verfahren zur Herstellung eines gesinterten Produkts nach einem der Ansprüche 1 bis 11, umfassend die folgenden aufeinanderfolgenden Schritte:
a) Herstellen eines Schlickers, enthaltend
- ein Lösungsmittel, das mehr als 50 Masse-% Wasser enthält,
- ein Tensid,
- wahlweise eine Säure und/oder eine Base,
- mehr als 4 Masse-%, bezogen auf den Schlicker, einer Pulvermischung, umfassend ein Siliciumcarbidpulver und ein Pulver eines Oxids mindestens eines Elements, ausgewählt aus Al und Y, gemischt mit einem Siliciumdioxid- oder Siliciumdioxidvorstufenpulver, dessen mittlere Größe kleiner als die des Siliciumcarbidpulvers ist, wobei die mittlere Partikelgröße des Siliciumcarbidpulvers kleiner als 2 µm ist und die mittlere Partikelgröße des Oxidpulvers kleiner ist als die des Siliciumcarbidpulvers, wobei das Oxidpulver durch ein Vorstufenpulver ersetzt werden kann,
b) wahlweise Gießen des Schlickers in eine Form,
c) Einfrieren des Schlickers, um einen Vorformling zu bilden, der durch Wände getrennte Eiskristalle aufweist, wobei die Wände das Gemenge aus Siliciumcarbidpulvern und dem Oxid oder der Vorstufe des Oxids aufweisen,
d) wahlweise Entformen des gefrorenen Schlickervorformlings,
e) Entfernen der Eiskristalle aus dem gefrorenen, gegebenenfalls entformten Schlickervorformling, vorzugsweise durch Sublimation, um einen Agglomeratverbund zu erhalten,
f) wahlweise Mahlen (Zerkleinern) und/oder Sieben des Agglomeratverbunds, um ein Pulver zu erhalten,
g) Sintern des Pulvers durch SPS ("Spark Plasma Sintering" auf Englisch), wobei während dieses Schritts die Formgebung des Produkts erfolgt, um unter folgenden Bedingungen ein erfindungsgemäßes Produkt zu erhalten:
- Sintertemperatur über 1700 °C,
- angewendeter Druck über 10 MPa,
- Haltezeit auf dem Plateau hoher Temperatur von null oder weniger als 60 Minuten,
- Anstiegsgeschwindigkeit bis zur Maximaltemperatur größer als 20 °C/min.

15. Verfahren nach Anspruch 14, wobei das Pulver eines Oxids mindestens eines Elements, ausgewählt aus Al und Y, ein YAG-Pulver (Y₃Al₅O₁₂) ist.

## Claims

1. A sintered product exhibiting a relative density of greater than 97% and composed of:
- more than 92% by weight of silicon carbide,
- between 0.5% and 8% by weight of an amorphous secondary phase comprising the elements O, Si and one or two elements chosen from Al and Y,
- less than 2% of other elements, present in said product in the form of an additional phase or of unavoidable impurities,
in which the silicon carbide is present in the form of crystalline grains and in which said secondary phase is amorphous and located essentially at the boundaries of the silicon carbide grains.

2. The product as claimed in claim 1, in which the mean size of the crystalline grains is less than 3 micrometers.

3. The product as claimed in either of claims 1 and 2, in which the amount of amorphous secondary phase is greater than 2% and/or less than 7% of the weight of said product.

4. The product as claimed in the preceding claim, in which the amount of amorphous secondary phase is greater than 3% and/or less than 6% of the weight of said product.

5. The product as claimed in one of the preceding claims, in which the amorphous secondary phase comprises Al and Si and O, in particular in the form of an amorphous oxide of aluminum and silicon.

6. The product as claimed in one of claims 1 to 4, in which the amorphous secondary phase comprises Y and Si and O, in particular in the form of an amorphous oxide of yttrium and silicon.

7. The product as claimed in one of claims 1 to 4, in which the amorphous secondary phase comprises Y, Al, Si and O, in particular in the form of an amorphous oxide of aluminum, yttrium and silicon.

8. The product as claimed in one of the preceding claims, in which the overall content of other elements is less than 1%, preferably less than 0.5%.

9. The product as claimed in one of the preceding claims, in which the mean size of the grains is between 200 nanometers and 1 micrometer.

10. The product as claimed in one of the preceding claims, in which the relative density is greater than 98.5%.

11. The product as claimed in one of the preceding claims, in which the number of free carbon inclusions on a surface area equal to 4 µm² is less than 2, preferably less than 1, preferably equal to 0, said inclusions being located between the silicon carbide grains.

12. The use of a product as described in one of the preceding claims as abrasion-resistant protective part which is resistant to impact wear.

13. An installation comprising a product as claimed in one of claims 1 to 11, chosen from a hopper, an item of equipment for the transportation or conveying of granular or pulverulent solids, an item of equipment for comminution under dry conditions or in a wet medium, an item of equipment for particle size selection, a grinding bead, a fan blade, a dynamic or static particle size selector, a spray or injection nozzle, a rotor or stirrer for suspensions, a seal, a pump, a collar or a bearing of a rotating shaft, a valve or a faucet.

14. A process for the manufacture of a sintered product as claimed in one of claims 1 to 11, comprising the following successive stages:
a) preparation of a slip comprising:
- a solvent comprising more than 50% by weight of water,
- a surface-active agent,
- optionally an acid and/or a base,
- more than 4%, as percentage by weight on the basis of the slip, of a mixture of powders comprising a silicon carbide powder and a powder of an oxide of at least one element chosen from Al and Y, mixed with a silica powder or silica precursor powder, the median size of which is less than that of the silicon carbide powder the median size of the particles of the silicon carbide powder being less than 2 µm and the median size of the particles of the oxide powder being less than that of the silicon carbide powder, it being possible for said oxide powder to be replaced with a powder of precursors,
b) optionally casting the slip in a mold,
c) freezing the slip, so as to form a preform comprising ice crystals separated by walls, said walls comprising said mixture of silicon carbide powder and powder of said oxide or precursor of said oxide,
d) optionally withdrawing said frozen slip preform from the mold,
e) removing the ice crystals from said frozen slip preform, optionally withdrawn from the mold, preferably by sublimation, so as to obtain an assembly of agglomerates,
f) optionally grinding (breaking up) and/or sieving the assembly of agglomerates, so as to obtain a powder,
g) sintering the powder by SPS (Spark Plasma Sintering), the shaping of the product being carried out during this stage, so as to obtain a product according to the invention according to the following conditions :
- the sintering temperature is greater than 1700°C,
- the pressure applied is greater than 10 MPa,
- the time for maintaining in the stationary phase at high temperature is zero or less than 60 minutes,
- the rate of rise to the maximum temperature is greater than 20°C/min.

15. The process as claimed in claim 14, in which the powder of an oxide of at least one element chosen from Al and Y is a YAG (Y₃Al₅O₁₂) powder.
